# EUROPÄISCHE PATENTSCHRIFT

(11) **EP 1 371 879 B1**
(45) Veröffentlichungstag und Bekanntmachung des Hinweises auf die Patenterteilung: **23.12.2009**
(21) Anmeldenummer: 03011486.2
(22) Anmeldetag: 21.05.2003
(51) Int. Cl.: F16H 57/08

(54) **Planetengetriebe**
Epicyclic gear
Train épicycloïdal

(30) Priorität: 15.06.2002 DE 10226796
(43) Veröffentlichungstag der Anmeldung: 17.12.2003
(73) Patentinhaber: DEERE & COMPANY, Moline, Illinois 61265-8098 (US)
(72) Erfinder: Buhrke, Frank, 69469 Weinheim (DE)
(74) Vertreter: Magin, Ludwig Bernhard

(56) Entgegenhaltungen:
- EP-A- 0 271 416
- EP-A- 0 618 383
- DE-A- 10 049 564
- US-A- 4 389 908
- US-A- 5 472 383
- US-A- 5 507 703

## Beschreibung

Die Erfindung betrifft ein Planetengetriebe, das ein Sonnenrad, eine Mehrzahl von Planetenrädern, welche jeweils auf einer zugehörigen Achse drehbar an einem Planetenträger gelagert sind, welcher sich axial erstreckende Vorsprünge aufweist, und gegebenenfalls ein die Planetenräder umgebendes Hohlrad oder Gehäuse enthält (siehe z.B. EP 0 271 416 A1 oder auch DE 100 49 564 A1).

Planetengetriebe, insbesondere Reibrad- und Zahnradplanetengetriebe werden in vielen Bereichen der Antriebs- und Abtriebstechnik eingesetzt, insbesondere dort, wo die Realisierung einer hohen Übersetzung und einer kompakten Bauweise gefordert ist, wie z. B. im Kraftfahrzeugbau. Dabei ist es erstrebenswert mit derartigen Planetengetrieben einen möglichst hohen Wirkungsgrad zu erzielen. Planetengetriebe weisen im Allgemeinen ein mit einer Antriebswelle verbundenes Sonnenrad auf, auf dem sich durch einen Planetenträger geführte Planetenräder abwälzen, wobei die Planetenräder in unterschiedlicher Anzahl gleichmäßig um das Sonnenrad angeordnet sind. Um die Planeten ist ein Hohlrad angeordnet, an dem sich die Planetenräder abstützen. Die Planetenräder sind jeweils drehbar auf Achsen gelagert, welche fest mit dem Planetenträger verbunden sind. Die Ausführung eines Planetenträgers kann dabei einwangig, d.h. die Planetenachsen werden einseitig von dem Planetenträger aufgenommen, oder mehrwangig, d.h. die Planetenachsen werden an mehreren Punkten von dem Planetenträger aufgenommen, ausgeführt werden. Als Achsen werden dabei, zur Aufnahme und Lagerung der Planeten, Planetenzapfen bzw. Planetenbolzen eingesetzt. Eine derartige Ausführung eines Planentengetriebes mit einwangigem Planetenträger wird in der WO 01/35004 A1 offenbart. Durch diese Art der Reibrad- bzw. Zahnradanordnung, ergeben sich eine Vielzahl von Drehmoment- und Drehzahlübertragungen. So kann beispielsweise der Abtrieb über das Hohlrad oder über den Planetenträger erfolgen. Weitere Möglichkeiten und Variationen hinsichtlich der Antriebs- und Abtriebsmöglichkeiten mit Planetengetrieben sind bekannt und werden beispielsweise in "Dubbel, Taschenbuch für den Maschinenbau" beschrieben.

Planetengetriebe werden unter anderem als Achsendgetriebe landwirtschaftlicher Fahrzeuge eingesetzt, wie z.B. auch bei John Deere Traktoren. Die genaue Ausführung eines Achsendgetriebes für die 6000er Serie eines John Deere Traktors ist im "Technical Manual 4552, Part 3, Section 256-20C1" dargestellt. Das Endgetriebe besteht hierbei im Wesentlichen aus einem Endgetriebegehäuse, dem Planetengetriebe und einer Radachse. Das Planetengetriebe wird von einer Antriebsachse des Antriebsstrangs des Traktors angetrieben, welche das Sonnenrad des Planetengetriebes darstellt. Wenn die Antriebsachse (Sonnenrad) rotiert, rollen die Planeten an dem Hohlrad ab, welches in diesem Fall fest mit dem Gehäuse verbunden ist, und bewirken, dass der Planetenträger, welcher fest mit der Radachse verbunden ist, in die gleiche Drehrichtung wie die Antriebsachse rotiert. Dabei wird ein hohes Antriebsmoment am Antriebsrad realisiert.

Um einen möglichst hohen Getriebewirkungsgrad zu erzielen, müssen die Reibverluste in einem solchen Planetengetriebe gering gehalten werden. Dazu wird das Getriebegehäuse mit Getriebeöl befüllt, so dass die Räder in einem Ölbad laufen. Nachteilig wirkt sich bei einem Planetengetriebe aus, dass bei Rotation des Planetenträgers und der Planeten um das Sonnenrad erhebliche Planschverluste entstehen und ein Aufschäumen des Getriebeöls eintritt. Dies bewirkt wiederum einen ungewollten Anstieg der Öltemperatur. Insbesondere die Planschverluste führen zu einer Abnahme des Getriebewirkungsgrades.
Die o.g. EP 0 271 416 A1 offenbart einen Planetenträger, der zweiwangig hergestellt wird, wobei die Wangen durch Abstandselemente, welche sich axial von der einen Wange aus erstrecken, zusammengefügt werden, bzw. miteinander verschraubt werden. Durch die Abstandselemente wird zwischen den Wangen, auf denen die Planetenräder gelagert sind ein Abstand definiert, so dass sich die Planetenträger frei bewegen können. Die von den Planetenrädern ausgeübten bzw. aufgenommenen Kräfte werden durch die Abstandelemente auf beide Wangen des Planetenträgers übertragen, so dass die Abstandelemente eine entsprechende Festigkeit bzw. Steifigkeit aufweisen müssen.

Ein weiterer Planetenträger ist in der o.g. DE 100 49 564 A1 offenbart. Der hier offenbarte Planetenträger ist ebenfalls zweiwangig ausgeführt und weist hochfeste Abstandselemente auf, die beide Wangen fest miteinander verbinden. Auch hier werden hohe Kräfte von den Abstandselementen auf die Wangen übertragen, so dass eine entsprechende Festigkeit bzw. Steifigkeit der Abstandselemente gegeben sein muss.

Die der Erfindung zugrunde liegende Aufgabe wird darin gesehen, ein Planetengetriebe der eingangs genannten Art anzugeben, durch welches die vorgenannten Probleme überwunden werden. Insbesondere soll ein wirkungsgradoptimiertes Planetengetriebe vorgeschlagen werden, in dem die bei Rotation des Planetenträgers und der Planeten entstehenden Planschverluste reduziert und ein Aufschäumen des Getriebeöls vermindert wird. Des Weiteren soll die durch das Umwälzen der Räder an das Getriebeöl abgegebene Wärmeenergie reduziert werden.

Die Aufgabe wird erfindungsgemäß durch die Lehre des Patentanspruchs 1 gelöst. Weitere vorteilhafte Ausgestaltungen und Weiterbildungen der Erfindung gehen aus den Unteransprüchen hervor.

Erfindungsgemäß sind die Vorsprünge freistehend ausgebildet und füllen die Zwischenräume, die sich zwischen benachbarten Planetenrädern, dem Sonnenrad und gegebenenfalls dem Hohlrad oder Gehäuse ergeben, im Wesentlichen aus, derart, dass kein Kontakt zwischen den Vorsprüngen und den Rädern zustande kommt. Durch ein Ausfüllen der Zwischenräume mit derartigen Vorsprüngen werden turbulente Strömungsvorgänge, die durch das Umwälzen der Räder und durch das damit verbundene Eintauchen rotierender Räder und Planetenträger in das Getriebeölbad hervorgerufen werden, maßgeblich reduziert. Die ausgebildeten Vorsprünge am Planetenträger sorgen für ein geführtes, seichtes Eintauchen der Planeten in das Getriebeölbad und verhindern, dass die Planeten auf die Oberfläche des Getriebeölbades "aufschlagen" und das Getriebeölbad aufschäumen. Dadurch wird eine Wirkungsgradoptimierung des Planetengetriebes durch Planschverlustreduzierung erzielt. Da die Verwirbelung des Getriebeöls erheblich vermindert wird und dieses sich im Wesentlichen nur noch auf vorgebbaren Bahnen in den Zwischenräumen bewegt, wird weniger Wärmeenergie erzeugt, so dass die Öltemperaturen geringer sind.

Die erfindungsgemäßen Vorsprünge sind sowohl in Reibradgetrieben als auch Zahnradplanetengetrieben oder auch in anderen Umlaufgetrieben, in denen auf Planetenachsen gelagerte Planeten einen Mittelpunkt umlaufen, einsetzbar. Die Vorsprünge können dabei aus einem relativ weichen oder niederfesten Werkstoff bestehen, da die Vorsprünge freistehend ausgebildet sind und keine tragende bzw. kraftübertragende Funktion haben.

In einer bevorzugten Ausbildung der Erfindung weist ein Vorsprung im Wesentlichen die Kontur und das Volumen eines Zwischenraums auf, derart, dass zwischen dem Vorsprung und den den Vorsprung umgebenden Rädern im Wesentlichen konstante Abstandsfugen ausgebildet sind. Die Abstandsfugen sind dabei so bemessen, dass entlang der zylindrisch gewölbten Hüllfläche eines jeden Rades (Sonnenrad, Planetenrad und Hohlrad) ein vorzugsweise möglichst kleiner und konstanter Abstand zu den Oberflächen der Vorsprünge hergestellt ist, wobei die Oberflächen der Vorsprünge ebenfalls zylindrisch gewölbte Hüllflächen aufweisen und zu den Hüllflächen der Räder korrespondieren, so dass die Kontur der Vorsprünge sich im Wesentlichen an die Geometrie der Räder anschmiegt. Dabei gilt, je kleiner die Abstandsfugen sind, umso größer ist das ausgefüllte Volumen der Zwischenräume und desto geringer die Planschverluste im Planetengetriebe. Hierbei sei darauf hingewiesen, dass auch eine Ausführung des Planetengetriebes mit größeren Abstandsfugen zweckmäßig sein kann, d.h. dass auch bei nicht weitgehend ausgefüllten Zwischenräumen eine Reduzierung der Planschverluste und damit eine Optimierung des Getriebewirkungsgrads eintritt.

In einer weiteren bevorzugten Ausbildung der Erfindung sind der Planetenträger und die Vorsprünge aus einem Teil gefertigt, beispielsweise in einem Stück gegossen. Die einteilige Ausbildung ist dahingehend von Vorteil, dass eine Montage der Vorsprünge an den Planetenträger entfällt und die Herstellkosten reduziert werden können.

In einer alternativen Ausgestaltung der Erfindung sind die Vorsprünge gesondert ausgebildet und an dem Planetenträger befestigt. Die Befestigung der Vorsprünge an den Planetenträger erfolgt dabei beispielsweise durch Verschraubungen, Passstifte, Nieten, Schweißungen oder andere Verbindungen. Der Vorteil dieser Lösung liegt insbesondere darin, dass der Planetenträger und die Vorsprünge aus unterschiedlichen Materialien bestehen können und für die Vorsprünge weniger festes und leichteres Material verwendet werden kann.

In einer besonders bevorzugten Ausgestaltung der Erfindung für vorzugsweise einwangige Planetenträger ist an den hinsichtlich des Planetenträgers gegenüberliegenden Stirnflächen der Vorsprünge eine Abschlussplatte vorgesehen, welche die Vorsprünge und die Planetenräder abdeckt. Die Abdeckung der Planetenräder durch eine Abschlussplatte bewirkt dabei eine zusätzliche Optimierung des Wirkungsgrads, da sich die Eigenrotation der Planeten auf diese Weise nur im reduzierten Maße auf das Getriebeölbad auswirkt. Die Abschlussplatte wird vorzugsweise gesondert ausgebildet und an die Vorsprünge oder dem Planetenträger befestigt. Die Befestigung der Abschlussplatte an die Vorsprünge bzw. an den Planetenträger erfolgt dabei beispielsweise durch Verschraubungen, Passstifte, Nieten, Schweißungen oder andere Verbindungen. In einer alternativen Ausgestaltung der Erfindung sind die Abschlussplatte und die Vorsprünge vorzugsweise einteilig ausgebildet und gemeinsam an den Planetenträger befestigt, wodurch Befestigungsmaßnahmen für die Abschlussplatte eingespart werden können.

In einer weiteren bevorzugten Ausgestaltung der Erfindung ist wenigstens eine den Rädern zugewandte Fläche der Vorsprünge und gegebenenfalls der Abschlussplatte profiliert ausgebildet. Dabei werden vorzugsweise Strömungsriefen in die Oberfläche der Vorsprünge eingebracht, derart, dass eine strömungsoptimierte Wechselwirkung zwischen der Oberfläche und dem Getriebeöl hervorgerufen wird. Die Strömungsriefen sind dabei vorzugsweise an den zylindrisch gewölbten Außenflächen der Vorsprünge eingebracht und verlaufen vorzugsweise in Drehrichtung der Räder. Des Weiteren ist das Einbringen anderer strömungsoptimierender Profilierungen denkbar, wie z.B. ein Schuppenmuster oder dergleichen.

Erfindungsgemäß bestehen die Vorsprünge und gegebenenfalls auch die Abschlussplatte, insbesondere bei gesonderter Ausbildung, vorzugsweise aus einem Werkstoff mit geringer Festigkeit und/oder Dichte. Da die Vorsprünge sowie gegebenenfalls auch die Abschlussplatte keine nennenswerten Kräfte und/oder Momente übertragen, ist es möglich, diese Bauteile vorzugsweise aus einem leichten und relativ weichen Werkstoff herzustellen. So können die Vorsprünge beispielsweise aus Aluminium, wärmefestem Kunststoff (z.B. Polyamid) oder auch Kohlefaser bestehen. Vorteilhaft ist dabei, dass derartige Werkstoffe eine sehr geringe Dichte besitzen und somit auch keine wesentlichen, zusätzlichen Massen bewegt werden müssen.

In einer alternativen Ausgestaltung der Erfindung können die Vorsprünge als Hohlkörper ausgebildet sein. Dadurch kann ebenfalls eine Gewichtsoptimierung bei Einsatz derartiger Vorsprünge erzielt werden. Die Hohlkörper sind vorzugsweise geschlossen, so dass kein Getriebeöl eindringen kann.

Anhand der Zeichnung, die ein Ausführungsbeispiel der Erfindung zeigt, werden nachfolgend die Erfindung sowie weitere Vorteile und vorteilhafte Weiterbildungen und Ausgestaltungen der Erfindung näher beschrieben und erläutert.

Es zeigt:
- Fig. 1: eine schematische Frontansicht eines erfindungsgemäßen Planetengetriebes mit sich zwischen den Planeten axial von einem Planetenträger erstreckenden Vorsprüngen,
- Fig. 2: eine schematische Querschnitts-Seitenansicht des erfindungsgemäßen Planetengetriebes aus Fig.1,
- Fig. 3: eine perspektivische Ansicht des schematisch dargestellten Vorsprungs aus Fig. 2,
- Fig. 4: eine perspektivische Ansicht eines schematisch dargestellten alternativ ausgebildeten Vorsprungs mit profilierten Oberflächen und
- Fig. 5: eine schematische Querschnitts-Seitenansicht eines erfindungsgemäßen Planetengetriebes in einer alternativen Ausführungsform mit Abschlussplatte.

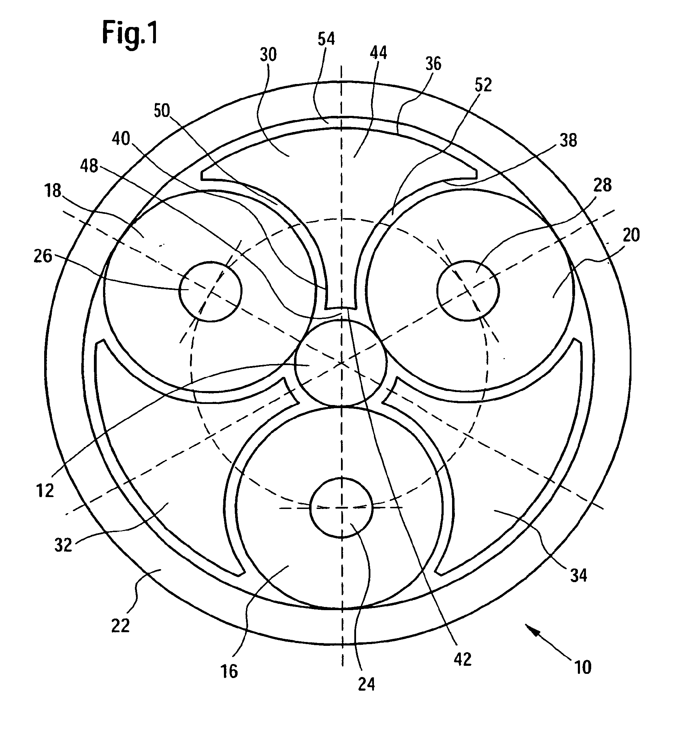

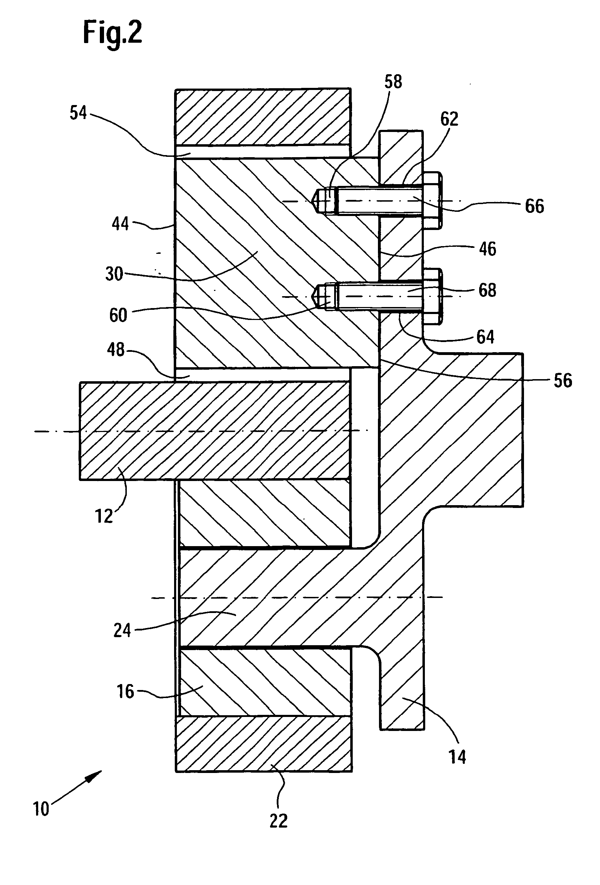

In Fig. 1 und Fig. 2 ist schematisch ein Zahnradplanetengetriebe 10 dargestellt, welches im Wesentlichen eine Antriebsachse oder ein Sonnenrad 12, einen mit einer nicht näher dargestellten Abtriebsachse verbundenen Planetenträger 14, Planetenräder 16, 18, 20 und ein mit einem nicht gezeigten Gehäuse fest verbundenes Hohlrad 22 enthält. Die Verzahnung der Räder 12, 16, 18, 20, 22 ist in den Figuren nicht näher dargestellt. Bei dem Planetengetriebe könnte es sich auch um ein Reibradplanetengetriebe handeln.

Der Planetenträger 14 enthält auf seinem Umfang gleichmäßig verteilte, sich axial erstreckende Planetenachsen oder Planetenzapfen 24, 26, 28, auf denen die Planetenräder 16, 18, 20 drehbar gelagert sind, wobei die Lagerung und eine axiale Fixierung der Planetenräder 16, 18, 20 auf den Planetenzapfen 24, 26, 28 nicht näher dargestellt ist. Des Weiteren enthält der Planetenträger 14 auf seinem Umfang gleichmäßig verteilte, sich axial über die gesamte Breite der Planetenräder 16, 18, 20 erstreckende Vorsprünge 30, 32, 34, die fest mit dem Planetenträger 14 verbunden sind.

Die Planeten 16, 18, 20 stehen mit dem Sonnenrad 12 und dem Hohlrad 22 in Zahneingriff, wobei die Planetenräder 16, 18, 20 das Sonnenrad 12 umlaufen und sich auf der Innenseite des Hohlrades 22 abwälzen und dabei die Planetenzapfen 24, 26, 28 um das Sonnenrad 12 bewegen. Durch die Bewegung der Planetenzapfen 24, 26, 28 wird der Planetenträger 14 in Rotation gebracht.

Aufgrund der Anordnung und Geometrie des Sonnenrades 12, der Planetenräder 16, 18, 20 und des Hohlrades 22 zueinander, ergibt sich jeweils zwischen den Planetenrädern 16, 18, 20, dem Sonnenrad 12 und dem Hohlrad 22 ein Zwischenraum, der erfindungsgemäß durch die Vorsprünge 30, 32, 34 ausgefüllt ist.

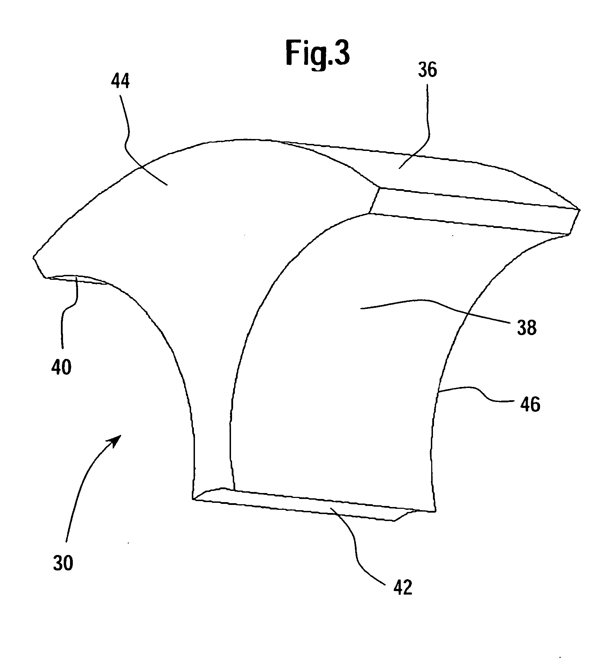

Die Ausbildung und Geometrie der Vorsprünge 30, 32, 34, d.h. die Kontur und das Volumen jedes Vorsprungs 30, 32, 34 entspricht vorzugsweise im Wesentlichen der Kontur und dem Volumen des sich zwischen Planetenrädern 16, 18, 20, Sonnenrad 12 und Hohlrad 22 ergebenden Zwischenraums. Ein entsprechender Vorsprung 30 ist in Fig. 3 stellvertretend für alle Vorsprünge 30, 32, 34, detailliert dargestellt. Die Vorsprünge 30, 32, 34 enthalten somit vier zylindrisch gewölbte Flächen 36, 38, 40, 42 und zwei plane Stirnfläche 44, 46. Die Krümmungsradien der zylindrisch gewölbten Flächen 36, 38, 40, 42 sind an die Krümmungsradien der entsprechenden Räder 12, 16, 18, 20, 22 angepasst. Die Krümmungsmittelpunkte der gewölbten Flächen 36, 38, 40, 42 fallen mit den Drehachsen der entsprechenden Räder 12, 16, 18, 20, 22 zusammen. Der Radius der Fläche 36 entspricht im Wesentlichen dem Innenradius des Hohlrades 22, der Radius der Flächen 38 und 40 entspricht im Wesentlichen dem Außenradius der Planetenräder 16, 18, 20 und der Radius der Fläche 42 entspricht im Wesentlichen dem Außenradius des Sonnenrades 12. Die Größe der Vorsprünge 30, 32, 34 ist dabei so bemessen, dass sich zwischen den Rädern 12, 16, 18, 20, 22 und den zylindrisch gewölbten Flächen 36, 38, 40, 42 der Vorsprünge 30, 32, 34 im Wesentlichen konstante und gleich breite Abstandsfugen 48, 50, 52, 54 ergeben, so dass die Vorsprünge 30, 32, 34 ohne Kontakt zu den Rädern 12, 16, 18, 20, 22 freistehend auf dem Planetenträger 14 angeordnet sind, wobei die Breite der Abstandsfugen 48, 50, 52, 54 bei einem Fahrzeuggetriebe vorzugsweise wenige Millimeter beträgt.

Wie aus Fig. 2 hervorgeht, schließen die freien Stirnflächen 44 der Vorsprünge 30, 32, 34 bündig mit den Stirnflächen der Planetenräder ab. Die anderen Stirnflächen 46 der Vorsprünge 30, 32, 34 liegen jeweils plan auf einer Anschlussfläche 56 am Planetenträger 14 auf.

Wie in Fig. 2 zu sehen, sind die Vorsprünge 30, 32, 34 mit dem Planetenträger 14 verbunden. Dazu sind die Stirnflächen 46 der Vorsprünge 30, 32, 34 mit Gewindebohrungen 58, 60 und die Anschlussflächen 56 des Planetenträgers 14 mit Durchgangsbohrungen 62 und 64 versehen. Durch Gewindebolzen 66, 68, die durch die Durchgangsbohrungen 62, 64 geführt und in die Gewindebohrungen 58, 60 eingeschraubt sind, sind die Vorsprünge 30, 32, 34 fest mit dem Planetenträger 14 verschraubt.

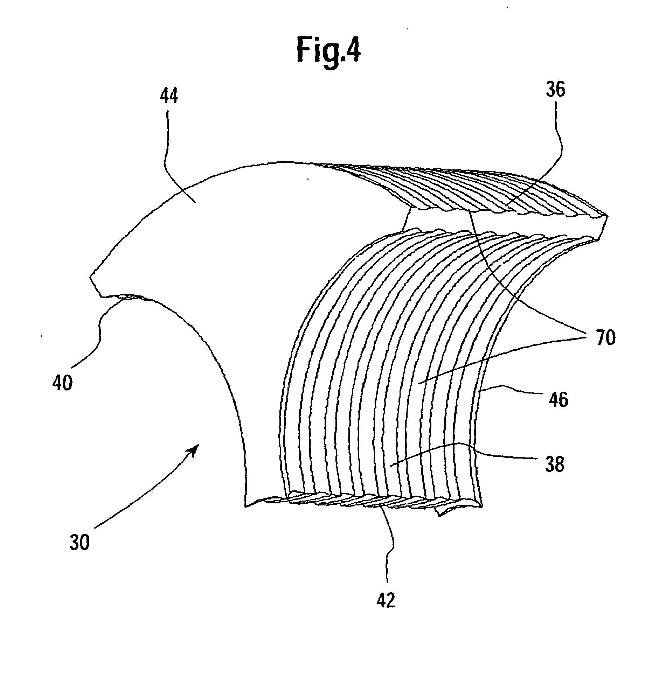

Fig. 4 zeigt ein zu Fig. 3 alternatives Ausführungsbeispiel eines erfindungsgemäßen Vorsprungs. Hierbei sind die zylindrisch gewölbten Flächen 36, 38, 40, 42 der Vorsprünge 30, 32, 34 mit Strömungsriefen 70 profiliert, welche längs zur Drehrichtung der jeweiligen Räder 12, 16, 18, 20, 22 ausgerichtet sind. Die Strömungsriefen sind dabei in einem gleichmäßigen axialen Abstand entlang der Flächen 36, 38, 40, 42 verteilt und besitzen eine Breite von wenigen, vorzugsweise 3-5 Millimetern.

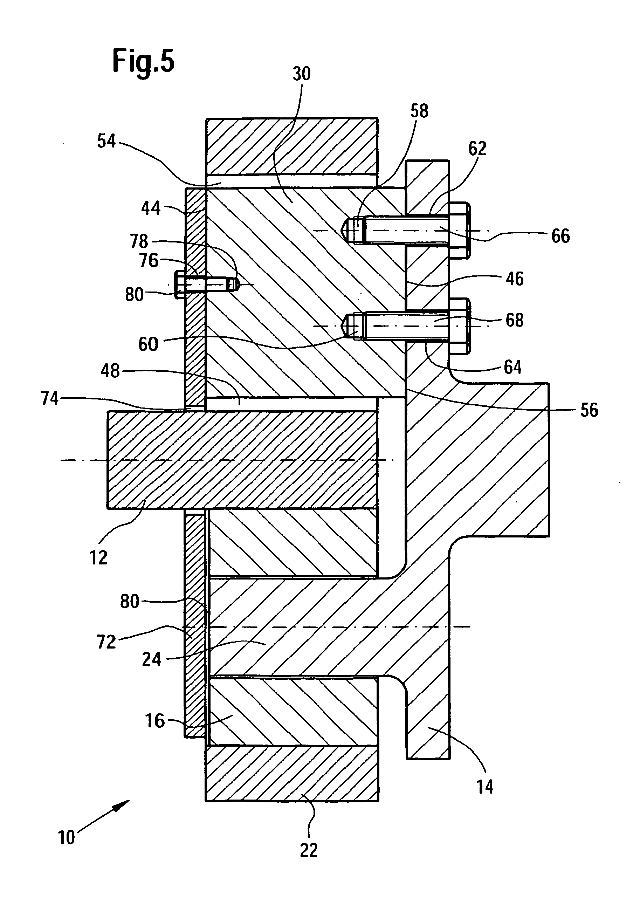

Fig. 5 zeigt ein alternatives Ausführungsbeispiel eines erfindungsgemäßen Planetengetriebes, wobei hier das in den Fig. 1 bis 3 dargestellte Planetengetriebe zusätzlich mit einer Abschlussplatte 72 versehen ist. Die Abschlussplatte 72 ist zylindrisch ausgebildet und schließt in radialer Richtung bündig mit den Vorsprüngen 30, 32, 34 ab. Die Abschlussplatte 72 enthält eine zentrische Bohrung 74, deren Durchmesser etwas größer als der Durchmesser des Sonnenrads 12 ist, so dass das Sonnerad 12 durch die Bohrung geführt werden kann, ohne dass ein Kontakt zwischen Abschlussplatte 72 und Sonnenrad 12 besteht. Jeweils im Bereich der Vorsprünge 30, 32, 34 ist die Abschlussplatte 72 mit Durchgangsbohrungen 76 versehen. An den entsprechend gleichen Stellen auf den Stirnseiten 44 der Vorsprünge 30, 32, 34 sind Gewindebohrungen 78 vorgesehen. Durch Gewindebolzen 80 ist die Abschlussplatte 72 fest mit den Vorsprüngen 30, 32, 34 verschraubt. In diesem alternativen Ausführungsbeispiel eines erfindungsgemäßen Planetengetriebes ragen die Vorsprünge 30, 32, 34 geringfügig über die Stirnseite der Planetenräder 16, 18, 20 bzw. über die Stirnseite der Planetenzapfen 24, 26, 28 hinaus, so dass zwischen der Anschlussplatte 72 und den Planetenrädern 16, 18, 20 bzw. den Planetenzapfen 24, 26, 28 ein Spalt 80 vorhanden ist.

Auch wenn die Erfindung lediglich anhand weniger Ausführungsbeispiele beschrieben wurde, erschließen sich für den Fachmann im Lichte der vorstehenden Beschreibung sowie der Zeichnung viele verschiedenartige Alternativen, Modifikationen und Varianten, die unter die vorliegende Erfindung fallen. So kann beispielsweise die Profilierung der zylindrisch gewölbten Flächen 36, 38, 40, 42 der Vorsprünge 30, 32, 34 auch andersartig erfolgen, beispielsweise durch Aufbringen eines strömungsoptimierenden Schuppenmusters oder dergleichen. Des Weiteren ist eine Ausgestaltung der Erfindung mit Hohlkörpern als Vorsprünge 30, 32, 34 denkbar, so dass eine Gewichtsoptimierung vorgenommen werden kann. Die beschriebenen Ausgestaltungen der Erfindung beziehen sich auf einwangige Planetenträger. Es können jedoch auch mehrwangige Planetenträger mit den oben beschriebenen Vorsprüngen 30, 32, 34 bestückt werden, so dass auch eine Wirkungsgradoptimierung durch Planschverlustreduzierung an Planetengetrieben mit mehrwangigen Planetenträgern durchgeführt werden kann.

## Patentansprüche

1. Planetengetriebe mit einem Sonnenrad (12), mit einer Mehrzahl von Planetenrädern (16, 18, 20), welche jeweils auf einer zugehörigen Achse (24, 26, 28) drehbar an einem Planetenträger (14) gelagert sind, welcher sich axial erstreckende Vorsprünge (30, 32, 34) aufweist, und gegebenenfalls mit einem die Planetenräder (16, 18, 20) umgebenden Hohlrad (22) oder Gehäuse, **dadurch gekennzeichnet, dass** die Vorsprünge (30, 32, 34) freistehend ausgebildet sind und die Zwischenräume, die sich zwischen benachbarten Planetenrädern (16, 18, 20), dem Sonnenrad (12) und gegebenenfalls dem Hohlrad (22) oder Gehäuse ergeben, im Wesentlichen ausfüllen, wobei kein Kontakt zwischen den Vorsprüngen (30, 32, 34) und den Rädern (12, 16, 18, 20, 22) zustande kommt.

2. Planetengetriebe nach Anspruch 1, **dadurch gekennzeichnet, dass** ein Vorsprung (30, 32, 34) im Wesentlichen die Kontur und das Volumen eines Zwischenraums aufweist, derart, dass zwischen dem Vorsprung (30, 32, 34) und den den Vorsprung umgebenden (12, 16, 18, 20, 22) Rädern im Wesentlichen konstante Abstandsfugen (48, 50, 52, 54) ausgebildet sind.

3. Planetengetriebe nach Anspruch 1 oder 2, **dadurch gekennzeichnet, dass** die Vorsprünge (30, 32, 34) und der Planetenträger (14) einteilig ausgebildet sind.

4. Planetengetriebe nach Anspruch 1 oder 2, **dadurch gekennzeichnet, dass** die Vorsprünge (30, 32, 34) gesondert ausgebildet und an dem Planetenträger (14) befestigt sind.

5. Planetengetriebe nach einem der vorhergehenden Ansprüche, **dadurch gekennzeichnet, dass** an den hinsichtlich des Planetenträgers (14) gegenüberliegenden Stirnflächen (44) der Vorsprünge (30, 32, 34) eine Abschlussplatte (72) vorgesehen ist, welche die Vorsprünge (30, 32, 34) und die Planetenräder (16, 18, 20) abdeckt.

6. Planetengetriebe nach Anspruch 5, **dadurch gekennzeichnet, dass** die Abschlussplatte (72) gesondert ausgebildet und an die Vorsprünge (30, 32, 34) befestigt ist.

7. Planetengetriebe nach Anspruch 6, **dadurch gekennzeichnet, dass** die Vorsprünge (30, 32, 34) und die Abschlussplatte (72) einteilig ausgebildet sind und gemeinsam an den Planetenträger (14) befestigt sind.

8. Planetengetriebe nach einem der vorhergehenden Ansprüche, **dadurch gekennzeichnet, dass** wenigstens eine den Rädern (12, 16, 18, 20, 22) zugewandte Fläche (36, 38, 40, 42) der Vorsprünge (30, 32, 34) und gegebenenfalls der Abschlussplatte (72) vorzugsweise durch Strömungsriefen (70) profiliert ausgebildet ist.

9. Planetengetriebe nach einem der Ansprüche 4 bis 8, **dadurch gekennzeichnet, dass** die Vorsprünge (30, 32, 34) aus einem Werkstoff mit geringer Festigkeit und/oder Dichte bestehen.

10. Planetengetriebe nach einem der Ansprüche 4 bis 9, **dadurch gekennzeichnet, dass** die Vorsprünge (30, 32, 34) als Hohlkörper ausgebildet sind.

## Claims

1. Epicyclic transmission, with a sun wheel (12), with a plurality of planet wheels (16, 18, 20) which are in each case rotatably mounted on an associated axis (24, 26, 28) on a planet carrier (14) which has axially extending projections (30, 32, 34), and, if appropriate, with a ring wheel (22) or housing surrounding the planet wheels (16, 18, 20), **characterized in that** the projections (30, 32, 34) are designed to be free-standing and essentially fill the interspaces which arise between adjacent planet wheels (16, 18, 20), the sun wheel (12) and, if appropriate, the ring wheel (22) or housing, no contact occurring between the projections (30, 32, 34) and the wheels (12, 16, 18, 20, 22).

2. Epicyclic transmission according to Claim 1, **characterized in that** a projection (30, 32, 34) has essentially the contour and volume of an interspace, in such a way that essentially constant clearances (48, 50, 52, 54) are formed between the projection (30, 32, 34) and the wheels (12, 16, 18, 20, 22) surrounding the projection.

3. Epicyclic transmission according to Claim 1 or 2, **characterized in that** the projections (30, 32, 34) and the planet carrier (14) are formed as one part.

4. Epicyclic transmission according to Claim 1 or 2, **characterized in that** the projections (30, 32, 34) are formed separately and are fastened to the planet carrier (14).

5. Epicyclic transmission according to one of the preceding claims, **characterized in that** a closing plate (72), which covers the projections (30, 32, 34) and the planet wheels (16, 18, 20), is provided on those end faces (44) of the projections (30, 32, 34) which lie opposite with respect to the planet carrier (14).

6. Epicyclic transmission according to Claim 5, **characterized in that** the closing plate (72) is formed separately and is fastened to the projections (30, 32, 34).

7. Epicyclic transmission according to Claim 6, **characterized in that** the projections (30, 32, 34) and the closing plate (72) are formed as one part and are fastened jointly to the planet carrier (14).

8. Epicyclic transmission according to one of the preceding claims, **characterized in that** at least one face (36, 38, 40, 42), confronting the wheels (12, 16, 18, 20, 22), of the projections (30, 32, 34) and, if appropriate, of the closing plate (72) is designed to be profiled preferably by means of flow grooves (70).

9. Epicyclic transmission according to one of Claims 4 to 8, **characterized in that** the projections (30, 32, 34) consist of a material of low strength and/or density.

10. Epicyclic transmission according to one of Claims 4 to 9, **characterized in that** the projections (30, 32, 34) are designed as hollow bodies.

## Revendications

1. Train épicycloïdal comprenant une roue solaire (12), comprenant une pluralité de roues planétaires (16, 18, 20) qui sont montées à chaque fois sur un axe associé (24, 26, 28) de manière à pouvoir tourner sur un porte-satellites (14), qui présente des saillies (30, 32, 34) s'étendant axialement, et éventuellement une couronne (22) entourant les roues planétaires (16, 18, 20) ou un boîtier, **caractérisé en ce que** les saillies (30, 32, 34) sont réalisées sous forme autoportante et remplissent substantiellement les espaces intermédiaires, qui sont ainsi formés entre des roues planétaires adjacentes (16, 18, 20), la roue solaire (12) et éventuellement la couronne (22) ou le boîtier, aucun contact n'ayant lieu entre les saillies (30, 32, 34) et les roues (12, 16, 18, 20, 22).

2. Train épicycloïdal selon la revendication 1, **caractérisé en ce qu'**une saillie (30, 32, 34) présente essentiellement le contour et le volume d'un espace intermédiaire, de telle sorte qu'entre la saillie (30, 32, 34) et les roues (12, 16, 18, 20, 22) entourant la saillie, soient réalisés des joints d'espacement essentiellement constants (48, 50, 52, 54).

3. Train épicycloïdal selon la revendication 1 ou 2, **caractérisé en ce que** les saillies (30, 32, 34) et le porte-satellites (14) sont réalisés d'une seule pièce.

4. Train épicycloïdal selon la revendication 1 ou 2, **caractérisé en ce que** les saillies (30, 32, 34) sont réalisées séparément et sont fixées sur le porte-satellites (14).

5. Train épicycloïdal selon l'une quelconque des revendications précédentes, **caractérisé en ce que** l'on prévoit sur les surfaces frontales (44) des saillies (30, 32, 34), opposées par rapport au porte-satellites (14), une plaque de terminaison (72) qui recouvre les saillies (30, 32, 34) et les roues planétaires (16, 18, 20).

6. Train épicycloïdal selon la revendication 5, **caractérisé en ce que** la plaque de terminaison (72) est réalisée séparément et est fixée aux saillies (30, 32, 34).

7. Train épicycloïdal selon la revendication 6, **caractérisé en ce que** les saillies (30, 32, 34) et la plaque de terminaison (72) sont réalisées d'une seule pièce et sont fixées ensemble au porte-satellites (14).

8. Train épicycloïdal selon l'une quelconque des revendications précédentes, **caractérisé en ce qu'**au moins une surface (36, 38, 40, 42) des saillies (30, 32, 34) et éventuellement de la plaque de terminaison (72), tournée vers les roues (12, 16, 18, 20, 22), est réalisée de préférence de manière profilée par des rainures d'écoulement (70).

9. Train épicycloïdal selon l'une quelconque des revendications 4 à 8, **caractérisé en ce que** les saillies (30, 32, 34) se composent d'un matériau ayant une faible solidité et/ou densité.

10. Train épicycloïdal selon l'une quelconque des revendications 4 à 9, **caractérisé en ce que** les saillies (30, 32, 34) sont réalisées sous forme de corps creux.
